# EUROPEAN PATENT APPLICATION

(11) **EP 3 971 326 A1**
(43) Date of publication of application: **23.03.2022**
(21) Application number: 20901478.6
(22) Date of filing: 14.12.2020
(51) Int. Cl.: C25B 11/04, C25B 11/03, C25B 1/34

(54) **ELECTRODE FOR ELECTROLYSIS**

(30) Priority: 19.12.2019 KR 20190170677
(71) Applicant: LG Chem, Ltd., Seoul 07336 (KR)
(72) Inventor: EOM, Hee Jun, Daejeon 34122 (KR); LEE, Dong Chul, Daejeon 34122 (KR); KIM, Yeon Yi, Daejeon 34122 (KR); KIM, Myung Hun, Daejeon 34122 (KR)
(74) Representative: Goddar, Heinz J.
(86) International application number: PCT/KR2020/018240
(87) International publication number: WO 2021/125720

(57) **Abstract**

The present invention relates to an electrode for electrolysis, in which a structure of a metal base layer is optimized, and a preparation method thereof, wherein the electrode for electrolysis of the present invention exhibits an overvoltage improved in comparison to a conventional electrode while having excellent durability due to a small loss of a coating layer.

## Description

### TECHNICAL FIELD

### Cross-reference to Related Applications

This application claims priority from Korean Patent Application No. 10-2019-0170677, filed on December 19, 2019, the disclosure of which is incorporated by reference herein.

### Technical Field

The present invention relates to an electrode for electrolysis which may improve an overvoltage and a method of preparing the same.

### BACKGROUND ART

Techniques for producing hydroxides, hydrogen, and chlorine by electrolysis of low-cost brine, such as sea water, are widely known. Such an electrolysis process is also called a chlor-alkali process, and may be referred to as a process that has already proven its performance and technical reliability in commercial operation for several decades.

With respect to the electrolysis of brine, an ion exchange membrane method, in which an ion exchange membrane is installed in an electrolytic bath to divide the electrolytic bath into a cation chamber and an anion chamber and brine is used as an electrolyte to obtain chlorine gas at an anode and hydrogen and caustic soda at a cathode, is currently the most widely used method.

The electrolysis of brine is performed by reactions as shown in the following electrochemical reaction formulae.
Anodic reaction: 2Cl⁻ -> Cl₂ + 2e⁻ (E⁰ = +1.36 V)
Cathodic reaction: 2H₂O + 2e⁻ -> 2OH⁻ + H₂ (E⁰ = -0.83 V)
Total reaction: 2Cl + 2H₂O -> 2OH⁻ + Cl₂ + H₂ (E⁰ = - 2.19 V)

In the electrolysis of brine, an overvoltage of the anode, an overvoltage of the cathode, a voltage due to resistance of the ion exchange membrane, and a voltage due to a distance between the anode and the cathode must be considered for an electrolytic voltage in addition to a theoretical voltage required for brine electrolysis, and the overvoltage caused by the electrode among these voltages is an important variable.

Thus, methods capable of reducing the overvoltage of the electrode have been studied, wherein, for example, a noble metal-based electrode called a DSA (Dimensionally Stable Anode) has been developed and used as the anode and development of an excellent material having durability and low overvoltage is required for the cathode.

Stainless steel or nickel has mainly been used as the cathode, and, particularly, since an over potential (η) in an electrolysis reaction is inversely proportional to an active surface area (A), nickel in the form of a woven mesh or expanded mesh, which may have a large active specific surface area, has mainly been used.

However, in a case in which a pore size of the nickel mesh is increased to increase the active specific surface area, it is difficult to secure flatness in a pretreatment process of a base during an electrode preparation process, there may be a problem in that the mesh pores may be clogged even in a process of forming a coating layer, it may affect material transfer of the electrolyte and desorption of hydrogen gas even when the prepared electrode is used for the electrolysis reaction, and thus, there is a need to develop a nickel mesh that satisfies appropriate conditions.

### PRIOR ART DOCUMENT

(Patent Document 1) JP2003-277967A

### DISCLOSURE OF THE INVENTION

### TECHNICAL PROBLEM

An aspect of the present invention provides an electrode for electrolysis, in which an overvoltage is improved in comparison to that of a conventional electrode by optimizing a wire thickness and a mesh size of a metal base that is used in the electrode for electrolysis, and a method of preparing the same.

### TECHNICAL SOLUTION

According to an aspect of the present invention, there is provided an electrode for electrolysis which includes a metal base layer, and a coating layer containing a ruthenium oxide and nitrogen, wherein the metal base layer has a mesh structure with a mesh size of 45 mesh to 60 mesh, an individual wire thickness of the mesh structure is in a range of 100 µm to 160 µm, and a nitrogen content in the coating layer is in a range of 20 mol% to 60 mol% based on the ruthenium oxide.

### ADVANTAGEOUS EFFECTS

An electrode for electrolysis of the present invention exhibits excellent durability due to a small loss of a coating layer in an electrolysis process while exhibiting a low overvoltage due to a large active specific surface area and less clogging of pores by the coating layer.

### MODE FOR CARRYING OUT THE INVENTION

Hereinafter, the present invention will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The expression "mesh" as a mesh size unit described in the present invention is defined as the number of eyes of a mesh which is included within 1 inch, and, for example, 40 mesh refers to a size of a mesh structure with 40 eyes within 1 inch.

### Electrode for Electrolysis

The present invention provides an electrode for electrolysis which includes a metal base layer, and a coating layer containing a ruthenium oxide and nitrogen, wherein the metal base layer has a mesh structure with a mesh size of 45 mesh to 60 mesh, an individual wire thickness of the mesh structure is in a range of 100 µm to 160 µm, and a nitrogen content in the coating layer is in a range of 20 mol% to 60 mol% based on the ruthenium oxide.

With respect to a conventional electrode for electrolysis, a metal base with a mesh size of 40 mesh was mainly used, but, in a case in which a mesh structure of 40 mesh was used as a metal base of an electrode for electrolysis, since a sufficient amount of active specific surface area may not be provided, there was a problem that a relatively high overvoltage appeared. Thus, inventors of the present invention invented an electrode for electrolysis which has excellent durability due to less detachment of a coating layer during electrolysis while being capable of improving the overvoltage by optimizing the structure of the metal base used in the electrode for electrolysis.

Specifically, the metal base of the electrode for electrolysis, which is provided in the present invention, has a mesh structure with a mesh size of 45 mesh to 60 mesh, and a thickness of an individual wire constituting the mesh structure is in a range of 100 µm to 160 µm. More specifically, the mesh size is in a range of 50 mesh to 60 mesh, and the thickness of the individual wire is in a range of 120 µm to 150 µm. In a case in which the mesh size of the metal base and the thickness of the individual wire are within the above ranges, respectively, there is less detachment of a coating layer component while the overvoltage is improved. Particularly, in a case in which the wire thickness is less than the range of the present invention, flatness may not be maintained in a pretreatment process during an electrode preparation process, and scratches may occur even with small impacts due to poor physical durability. Also, since an active area also decreases as the wire thickness decreases, a problem of increasing the overvoltage in comparison to the conventional electrode may occur. Furthermore, in a case in which the wire thickness is greater than the range of the present invention, the coating layer may not be uniformly formed due to the thick individual wire, the detachment of the coating layer component may more easily occur, and a gas trap phenomenon may occur due to the generation of a dead volume between the wire and a membrane.

The metal base may be nickel, titanium, tantalum, aluminum, hafnium, zirconium, molybdenum, tungsten, stainless steel, or an alloy thereof, and, among these metals, the metal base may preferably be nickel. In the electrode for electrolysis of the present invention, in a case in which the above-described types of metal bases are used, better durability and mechanical strength may be provided to the electrode.

In the electrode for electrolysis of the present invention, the coating layer contains a ruthenium oxide. The ruthenium oxide, as an active material, plays a role in providing a ruthenium element to the coating layer, wherein, in a case in which the ruthenium oxide is used in the coating layer of the electrode for electrolysis, a change in electrode performance over time is small while an overvoltage phenomenon is improved, and, subsequently, a separate activation process may be minimized. The ruthenium oxide includes all types of oxides in which the ruthenium element and an oxygen atom are bonded, and, particularly, may be a dioxide or a tetraoxide.

In the electrode for electrolysis of the present invention, the coating layer contains nitrogen. The nitrogen is due to an amine-based additive included in a coating composition during a preparation process of the coating layer, wherein, in a case in which the amine-based additive is added to the coating composition, the amine-based additive may improve a binding force between ruthenium elements contained in the coating layer and a binding force between the ruthenium element and another metallic element when the another metallic element is contained and may control an oxidation state of particles containing the ruthenium element to prepare an electrode in a form more suitable for reaction.

A nitrogen content in the coating layer may be in a range of 30 mol% to 70 mol%, for example, 40 mol% to 60 mol% based on the ruthenium oxide, and, in a case in which the nitrogen content is within the above range, an improvement in the binding force between the ruthenium elements may be maximized. Also, when the nitrogen content is less than the above range, occurrence of an effect by the nitrogen is insignificant, and, when the nitrogen content is greater than the above range, a problem may occur in which the nitrogen rather acts as an impurity in the coating layer.

In the electrode for electrolysis of the present invention, the coating layer may further contain a cerium oxide, and the cerium oxide plays a role in providing a cerium element to the catalyst layer of the electrode for electrolysis. The cerium element provided by the cerium oxide may minimize a loss of the ruthenium element, as an active material in the catalyst layer of the electrode for electrolysis, during activation or electrolysis by improving the durability of the electrode for electrolysis.

Specifically, during the activation or electrolysis of the electrode for electrolysis, particles containing the cerium element in the catalyst layer become a metallic element without changing their structure or are partially hydrated and reduced to active species. In addition, since particles containing the cerium element in the catalyst layer change their structure into a needle shape, the particles act as a protective material that prevents physical detachment of the particles containing the ruthenium element in the catalyst layer, and, as a result, the durability of the electrode for electrolysis may be improved to prevent the loss of the ruthenium element in the catalyst layer. The cerium oxide includes all types of oxides in which the cerium element and an oxygen atom are bonded, and, particularly, may be an oxide of (II), (III) or (IV).

A molar ratio between the ruthenium element and the cerium element, which are contained in the coating layer, may be in a range of 100:5 to 100:30, for example, 100:10 to 100:20. In a case in which the molar ratio between the ruthenium element and the cerium element, which are contained in the coating layer, is within the above-described range, a balance between the durability and the electrical conductivity of the electrode for electrolysis may be excellent.

In the electrode for electrolysis of the present invention, the coating layer may further contain a platinum oxide. A platinum element provided by the platinum oxide may act as an active material like the ruthenium element, and, in a case in which the platinum oxide and the ruthenium oxide are contained in the coating layer together, it may exhibit a better effect in terms of durability and overvoltage of the electrode. The platinum oxide includes all types of oxides in which the platinum element and an oxygen atom are bonded, and, particularly, may be a dioxide or a tetraoxide.

A molar ratio between the ruthenium element and the platinum element, which are contained in the coating layer, may be in a range of 100:2 to 100:20, for example, 100:5 to 100:15. In a case in which the molar ratio between the ruthenium element and the platinum element, which are contained in the coating layer, is within the above-described range, it is desirable in terms of improving the durability and overvoltage, wherein, in a case in which the platinum element is contained less than the above range, the durability and overvoltage may degrade, and, in a case in which the platinum element is contained more than the above range, it is disadvantageous in terms of economic efficiency.

### Method of Preparing Electrode for Electrolysis

The present invention provides a method of preparing an electrode for electrolysis which includes the steps of: applying a coating composition on at least one surface of a metal base having a mesh structure in which a mesh size is in a range of 45 mesh to 60 mesh and an individual wire thickness of the mesh structure is in a range of 100 µm to 160 µm, and coating by drying and heat-treating the metal base on which the coating composition has been applied, wherein the coating composition includes a ruthenium precursor and an amine-based additive in a molar ratio of 100:5 to 100:20.

In the method of preparing an electrode for electrolysis of the present invention, the metal base may be the same as the previously described metal base of the electrode for electrolysis.

In the method of preparing an electrode for electrolysis of the present invention, the coating composition may include a ruthenium precursor and an amine-based additive. The ruthenium precursor is converted into oxides by being oxidized in the heat treatment step after the coating.

The ruthenium precursor may be used without particular limitation as long as it is a compound capable of forming a ruthenium oxide, may be, for example, a hydrate, hydroxide, halide, or oxide of ruthenium, and may specifically be at least one selected from the group consisting of ruthenium hexafluoride (RuF₆), ruthenium(III) chloride (RuCl₃), ruthenium(III) chloride hydrate (RuCl₃·xH₂O), ruthenium(III) bromide (RuBr₃), ruthenium(III) bromide hydrate (RuBr_{3·}xH₂O), ruthenium iodide (RuI₃), and ruthenium acetate. When the ruthenium precursors listed above are used, the formation of the ruthenium oxide may be easy.

In the method of preparing an electrode for electrolysis of the present invention, the coating composition may further include an amine-based additive to provide a strong adhesion between the coating layer and the metal base. Particularly, the amine-based additive may improve a binding force between the ruthenium elements which are contained in the coating layer and may control an oxidation state of the particles containing the ruthenium element to prepare an electrode in a form more suitable for reaction.

The amine-based additive used in the present invention is particularly suitable for use in forming a coating layer due to its high solubility in water while having an amine group. The amine-based additive that may be used in the present invention includes melamine, ammonia, urea, 1-propylamine, 1-butylamine, 1-pentylamine, 1-heptylamine, 1-octylamine, 1-nonylamine, or 1-dodecylamine, and at least one selected from the group consisting thereof may be used.

In the electrode for electrolysis of the present invention, the ruthenium element and the amine-based additive of the coating layer may be included in a molar ratio of 100:20 to 100:40, for example, 100:25 to 100:35. In a case in which the amine-based additive is included less than the above molar ratio range, an effect of improving the binding force by the additive is insignificant, and, in a case in which the amine-based additive is included more than the above molar ratio range, since precipitates may easily occur in a coating liquid, uniformity of the coating may not only be reduced, but the function of the ruthenium oxide may also be hindered.

The coating composition may further include a cerium precursor for forming a cerium oxide in the coating layer. The cerium precursor may be used without particular limitation as long as it is a compound capable of forming a cerium oxide, may be, for example, a hydrate, hydroxide, halide, or oxide of a cerium element, and may specifically be at least one cerium precursor selected from the group consisting of cerium(III) nitrate hexahydrate (Ce(NO₃)₃·6H₂O), cerium(IV) sulfate tetrahydrate (Ce(SO₄)₂· 4H₂O) , and cerium(III) chloride heptahydrate (CeCl₃·7H₂O). When the cerium precursors listed above are used, the formation of the cerium oxide may be easy.

The coating composition may further include a platinum precursor for forming a platinum oxide in the coating layer. The platinum precursor may be used without particular limitation as long as it is a compound capable of forming a platinum oxide, and, for example, at least one platinum precursor selected from the group consisting of chloroplatinic acid hexahydrate (H₂PtCl₆·6H₂O), diamine dinitro platinum (Pt(NH₃)₂(NO)₂), platinum(IV) chloride (PtCl₄), platinum(II) chloride (PtCl₂), potassium tetrachloroplatinate (K₂PtCl₄) , and potassium hexachloroplatinate (K₂PtCl₆) may be used. When the platinum precursors listed above are used, the formation of the platinum oxide may be easy.

In the method of preparing an electrode for electrolysis of the present invention, an alcohol-based solvent may be used as a solvent of the coating composition. In a case in which the alcohol-based solvent is used, dissolution of the above-described components is easy, and it is possible to maintain the binding force of each component even in the step of forming the coating layer after the application of the coating composition. Preferably, at least one of isopropyl alcohol and butoxyethanol may be used as the solvent, and, more preferably, a mixture of isopropyl alcohol and butoxyethanol may be used. In a case in which the isopropyl alcohol and the butoxyethanol are mixed and used, uniform coating may be performed in comparison to a case where the isopropyl alcohol and the butoxyethanol are used alone.

In the preparation method of the present invention, the preparation method may include a step of performing a pretreatment of the metal base before performing the coating.

The pretreatment may include the formation of irregularities on a surface of the metal base by chemical etching, blasting or thermal spraying.

The pretreatment may be performed by sandblasting the surface of the metal base to form fine irregularities, and performing a salt or acid treatment. For example, the pretreatment may be performed in such a manner that the surface of the metal base is blasted with alumina to form irregularities, immersed in a sulfuric acid aqueous solution, washed, and dried to form fine irregularities on the surface of the metal base.

The application is not particularly limited as long as the catalyst composition may be evenly applied on the metal base and may be performed by a method known in the art.

The application may be performed by any one method selected from the group consisting of doctor blading, die casting, comma coating, screen printing, spray coating, electrospinning, roller coating, and brushing.

The drying may be performed at 50°C to 300°C for 5 minutes to 60 minutes, and may preferably be performed at 50°C to 200°C for 5 minutes to 20 minutes.

When the above-described condition is satisfied, energy consumption may be minimized while the solvent may be sufficiently removed.

The heat treatment may be performed at 400°C to 600°C for 1 hour or less, and may preferably be performed at 450°C to 550°C for 5 minutes to 30 minutes.

When the above-described condition is satisfied, it may not affect strength of the metal base while impurities in the catalyst layer are easily removed.

The coating may be performed by sequentially repeating applying, drying, and heat-treating so that an amount of ruthenium oxide per unit area (m²) of the metal base is 10 g or more. That is, after the catalyst composition is applied on at least one surface of the metal base, dried, and heat-treated, the preparation method according to another embodiment of the present invention may be performed by repeatedly applying, drying, and heat-treating the one surface of the metal base which has been coated with the first coating composition.

Hereinafter, the present invention will be described in more detail according to examples and experimental examples, but the present invention is not limited to these examples and experimental examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Material

In the present example, ruthenium(III) chloride hydrate (RuCl₃·nH₂O) was used as a ruthenium precursor, platinum(IV) chloride was used as a platinum precursor, and cerium(III) nitrate hexahydrate (Ce(NO₃)₃·6H₂O) was used as a cerium precursor. Also, urea was used as an amine-based additive, and a mixture of 2.375 ml of isopropyl alcohol and 2.375 ml of 2-butoxyethanol was used as a solvent for a coating composition.

### Preparation of Coating Composition

2.41 mmol of ruthenium(III) chloride hydrate, 0.842 mmol of cerium(III) nitrate hexahydrate (Ce(NO₃)₃·6H₂O), and 0.1928 mmol of platinum(IV) chloride were sufficiently dissolved for 1 hour in the mixed solvent of the above materials, and 0.045 g of urea was added and mixed to prepare a coating composition.

### Pretreatment of Metal Base

After a surface of a metal base, which will be used in each of examples and comparative examples, was blasted with aluminum oxide (White alumina, F120) at a pressure of 0.4 MPa before forming a coating layer on the metal base, the base was put in a 5 M H₂SO₄ aqueous solution heated to 80°C, treated for 3 minutes, and then washed with distilled water to complete a pretreatment.

### Example 1

After a pretreatment was performed on a nickel mesh (purity of 99% or more) having a wire thickness of 120 µm and a mesh size of 60 mesh by the previously described pretreatment method, the coating composition prepared in advance was coated on the pretreated nickel mesh using a brush. Thereafter, the coated nickel mesh was dried in a convection drying oven at 180°C for 10 minutes and was further heat-treated in an electric heating furnace at 500°C for 10 minutes. After the above-described coating, drying, and heat treatment processes were further performed 9 times, an electrode for electrolysis was finally prepared by performing a heat treatment in an electric heating furnace at 500°C for 1 hour.

### Example 2

An electrode for electrolysis was prepared in the same manner except that a nickel mesh (purity of 99% or more) having a wire thickness of 150 µm and a mesh size of 60 mesh was used as the nickel mesh in Example 1.

### Example 3

An electrode for electrolysis was prepared in the same manner except that a nickel mesh (purity of 99% or more) having a wire thickness of 150 µm and a mesh size of 50 mesh was used as the nickel mesh in Example 1.

### Comparative Example 1

An electrode for electrolysis was prepared in the same manner except that a nickel mesh (purity of 99% or more) having a wire thickness of 150 µm and a mesh size of 40 mesh was used as the nickel mesh in Example 1.

### Comparative Example 2

An electrode for electrolysis was prepared in the same manner except that a nickel mesh (purity of 99% or more) having a wire thickness of 150 µm and a mesh size of 30 mesh was used as the nickel mesh in Example 1.

### Comparative Example 3

An electrode for electrolysis was prepared in the same manner except that a nickel mesh (purity of 99% or more) having a wire thickness of 150 µm and a mesh size of 80 mesh was used as the nickel mesh in Example 1.

### Comparative Example 4

An electrode for electrolysis was prepared in the same manner except that a nickel mesh (purity of 99% or more) having a wire thickness of 180 µm and a mesh size of 60 mesh was used as the nickel mesh in Example 1.

### Comparative Example 5

An electrode for electrolysis was prepared in the same manner except that a nickel mesh (purity of 99% or more) having a wire thickness of less than 80 µm and a mesh size of 60 mesh was used as the nickel mesh in Example 1.

### Comparative Example 6

An electrode for electrolysis was prepared in the same manner except that the platinum precursor and the urea were excluded from the coating composition in Example 1.

Metal base structures and ruthenium and nitrogen contents in coating layers of the electrodes prepared in the examples and the comparative examples were confirmed by energy dispersive X-ray spectroscopy (EDX) analysis and summarized in Table 1 below. Bruker D4 Endeavor was used as an instrument used for the EDX analysis.

**[Table 1]**

| | Example 1 | Example 2 | Example 3 | Comparat ive Example 1 | Comparat ive Example 2 | Comparat ive Example 3 | Comparat ive Example 4 | Comparat ive Example 5 | Comparat ive Example 6 |
|---|---|---|---|---|---|---|---|---|---|
| Mesh size (unit:mesh) | 60 | 60 | 50 | 40 | 30 | 80 | 60 | 60 | 60 |
| Wire thickness (µm) | 120 | 150 | 150 | 150 | 150 | 150 | 180 | >80 | 120 |
| Ru(mol%) in the electrode | 18 | 14 | 15 | 17 | 26 | 23 | 16 | 23 | 26 |
| Ni(mol%) in the electrode | 9 | 7 | 7 | 7 | 9 | 9 | 7 | 10 | 4 |
| N/Ru×100 (mol%) | 50 | 50 | 46 | 41 | 35 | 39 | 44 | 43 | 15 |

Comparative Examples 1 to 3 are for cases outside the mesh size range of the present invention, Comparative Examples 4 and 5 are for cases outside the individual wire thickness of the present invention, and Comparative Example 6 is for a case where some of the coating layer components of the present invention are not included. With respect to the examples, since the coating was performed smoothly, ratios of nitrogen to ruthenium were higher than those of the comparative examples, and, particularly, with respect to Comparative Example 6 in which urea was not included in the coating composition, a nitrogen content was significantly lower than those of the examples and other comparative examples.

### Experimental Example 1. Performance Check of the Prepared Electrodes for Electrolysis

In order to confirm performances of the electrodes prepared in the examples and the comparative examples, a performance test in chlor-alkali electrolysis was performed. Lab-scale zero-gap single-cell test equipment was used as performance test equipment, and a cell size was 50 mm × 50 mm, wherein an Aciplex F6808 membrane was used. The prepared electrode for electrolysis was used as a cathode, and a commercially available electrode manufactured by AKC was used as an anode. Test conditions included a current density of 6.2 kA/m², a sodium chloride solution with a concentration of 305 g/L as an anolyte, a 30.6% NaOH aqueous solution as a catholyte, and a reaction temperature of 90°C, and a voltage was measured under the above test conditions. The measured voltage values are presented in Table 2 below.

**[Table 2]**

| Category | Example 1 | Example 2 | Example 3 | Comparat ive Example 1 | Comparat ive Example 2 | Comparat ive Example 3 | Comparat ive Example 4 | Comparat ive Example 5 | Comparat ive Example 6 |
|---|---|---|---|---|---|---|---|---|---|
| Voltage (at 6.2 kA/m², unit: V) | 3.129 | 3.087 | 3.093 | 3.133 | 3.151 | 3.240 | 3.096 | 3.220 | 3.156 |

From the above results, with respect to Comparative Examples 1 to 3 in which mesh sizes were outside the range of the present invention, it was confirmed that electrode performances were inferior to those of the examples of the present invention. Also, it was confirmed that electrode performance of Comparative Example 6, which did not contain nitrogen among the coating components of the present invention, was also inferior to those of the examples of the present invention. Furthermore, with respect to Comparative Example 5 in which a mesh structure having a wire thickness less than the range of the present invention, it was confirmed that electrode performance was also inferior to those of the examples. With respect to Comparative Example 4 in which a wire thickness was greater than those of the examples, it exhibited electrode performance similar to those of the examples of the present invention.

### Experimental Example 2. Check for the Presence of Loss of Coating Layer Before and After Accelerated Test

The presence of loss of coating layer before and after an accelerated test of the electrodes prepared in the examples and the comparative examples was checked. The accelerated test was performed using the prepared electrode as a half cell, and, after an electrolysis reaction was performed for 1 hour under a constant current density (60 kA/m²) condition by a constant current method, metal contents of the coating layer before and after the accelerated test were confirmed through an X-ray fluorescence (XRF) analyzer. A 32% sodium hydroxide aqueous solution was used as an electrolyte, a platinum (Pt) wire was used as a counter electrode, and a Hg/HgO electrode was used as a reference electrode. Composition ratios of ruthenium, cerium, and platinum components of the coating layers before and after the accelerated test are presented in Table 3 below.

**[Table 3]**

| | Before accelerated test | | | After accelerated test | | | Ru variation (%) |
|---|---|---|---|---|---|---|---|
| | Ru | Ce | Pt | Ru | Ce | Pt | |
| Example 1 | 5.27 | 3.89 | 2.56 | 5.14 | 3.65 | 1.99 | 97.5 |
| Example 2 | 5.57 | 4.41 | 2.87 | 5.39 | 3.83 | 2.37 | 96.8 |
| Example 3 | 5.33 | 4.20 | 2.62 | 5.27 | 3.91 | 2.27 | 98,8 |
| Comparative Example 1 | 4.94 | 5.05 | 2.63 | 5.01 | 4.22 | 2.32 | 101.4 |
| Comparative Example 2 | 4.89 | 4.59 | 2.77 | 5.09 | 3.38 | 2.40 | 104.1 |
| Comparative Example 3 | 5.41 | 4.09 | 2.83 | 5.72 | 3.40 | 2.97 | 105.7 |
| Comparative Example 4 | 5.06 | 4.71 | 2.73 | 4.26 | 3.84 | 2.34 | 75.9 |
| Comparative Example 5 | 4.79 | 4.42 | 2.51 | 4.70 | 3.78 | 2.42 | 98.1 |
| Comparative Example 6 | 5.10 | 4.56 | - | 5.02 | 4.12 | - | 98.4 |

From the above results, detachment of the coating layer hardly occurred in the examples of the present invention, but, with respect to Comparative Example 4, which exhibited an overvoltage similar to that of the present invention, it was found that about 25% of ruthenium loss occurred. The detachment of the coating layer becomes a factor that prevents the electrolysis reaction from proceeding uniformly. That Ru variations in Comparative Examples 1 to 3 were 100% or more was confirmed due to a measurement error.

## Claims

1. An electrode for electrolysis, the electrode comprising:
a metal base layer; and
a coating layer containing a ruthenium oxide and nitrogen,
wherein the metal base layer has a mesh structure with a mesh size of 45 mesh to 60 mesh,
an individual wire thickness of the mesh structure is in a range of 100 µm to 160 µm, and
a nitrogen content in the coating layer is in a range of 30 mol% to 70 mol% based on the ruthenium oxide.

2. The electrode for electrolysis of claim 1, wherein the mesh size of the metal base layer is in a range of 50 mesh to 60 mesh.

3. The electrode for electrolysis of claim 1, wherein the individual wire thickness of the mesh structure is in a range of 120 µm to 150 µm.

4. The electrode for electrolysis of claim 1, wherein the coating layer further contains a cerium oxide.

5. The electrode for electrolysis of claim 4, wherein a molar ratio of a ruthenium element to a cerium element in the coating layer is in a range of 100:5 to 100:30.

6. The electrode for electrolysis of claim 1, wherein the coating layer further contains a platinum oxide.

7. The electrode for electrolysis of claim 6, wherein a molar ratio of a ruthenium element to a platinum element in the coating layer is in a range of 100:2 to 100:20.

8. A method of preparing an electrode for electrolysis, the method comprising:
applying a coating composition on at least one surface of a metal base having a mesh structure in which a mesh size is in a range of 45 mesh to 60 mesh and an individual wire thickness of the mesh structure is in a range of 100 µm to 160 µm; and
coating by drying and heat-treating the metal base on which the coating composition has been applied,
wherein the coating composition comprises a ruthenium precursor and an amine-based additive in a molar ratio of 100:20 to 100:40.

9. The method of claim 8, wherein the amine-based additive is at least one selected from the group consisting of melamine, ammonia, urea, 1-propylamine, 1-butylamine, 1-pentylamine, 1-heptylamine, 1-octylamine, 1-nonylamine, and 1-dodecylamine.

10. The method of claim 8, wherein the coating composition further comprises a cerium precursor and a platinum precursor.
